# FASCICULE DE BREVET EUROPEEN

(11) **EP 2 576 166 B1**
(45) Date de publication et mention de la délivrance du brevet: **15.11.2017**
(21) Numéro de dépôt: 11725167.8
(22) Date de dépôt: 13.05.2011
(51) Int. Cl.: B27N 7/00, B32B 5/28, B32B 21/10, B60R 13/02, C08J 7/06, D06M 13/402, E04B 1/74, E04F 13/00

(54) **MAT DE FIBRES DE POLYMERE CONTENANT UN DIHYDRAZIDE, ET SON UTILISATION.**
MATTE AUS POLYMERFASERN ENTHALTEND EIN DIHYDRAZID, UND IHRE VERWENDUNG
POLYMERIC FIBRE MAT COMPRISING A DIHYDRAZIDE, AND ITS USE.

(30) Priorité: 25.05.2010 FR 1054021
(43) Date de publication de la demande: 10.04.2013
(73) Titulaire: Saint-Gobain Adfors, 73000 Chambéry (FR)
(72) Inventeur: BLANCHARD, Benjamin, F-95150 Taverny (FR); JAFFRENNOU, Boris, F-75010 Paris (FR); CHUDA, Katarzyna, 92600 Asnieres sur Seine (FR)
(74) Mandataire: Saint-Gobain Recherche
(86) Numéro de dépôt international: PCT/FR2011/051074
(87) Numéro de publication internationale: WO 2011/148076

(56) Documents cités:
- EP-A1- 2 226 418
- EP-A2- 0 812 948
- WO-A2-2010/070248
- DE-U1-202005 005 208
- FR-A1- 2 946 265
- US-A1- 2004 101 695
- US-A1- 2008 187 738
- Anonyme: "Qualité de l'air intérieur: Saint-Gobain lance NOVELIO CleanAir", , [Online] octobre 2009 (2009-10), XP002614527, Saint-Gobain Technical Fabrics - Communiqué de presse Extrait de l'Internet: URL:http://www.sgtf.com/News/NOVELIOCleanA irOctober2009French> [extrait le 2010-12-16]
- JUNGHYE KIM ET AL: "THERMAL STORAGE/RELEASE, DURABILITY, AND TEMPERATURE SENSING PROPERTIES OF THERMOSTATIC FABRICS TREATED WITH OCTADECANE-CONTAINING MICROCAPSULES", TEXTILE RESEARCH JOURNAL, vol. 12, no. 72, 1 décembre 2002 (2002-12-01), pages 1093-1098, XP001141566, SAGE PUBLICATIONS, LONDON, GB ISSN: 0040-5175
- KIM ET AL: "Control of formaldehyde and TVOC emission from wood-based flooring composites at various manufacturing processes by surface finishing", JOURNAL OF HAZARDOUS MATERIALS, vol. 176, no. 1-3, 15 avril 2010 (2010-04-15), pages 14-19, XP026867616, ELSEVIER, AMSTERDAM, NL ISSN: 0304-3894, DOI: DOI:10.1016/J.JHAZMAT.2009.03.113 [extrait le 2009-03-31]

## Description

L'invention se rapporte à un mat de fibres de polymère qui renferme un dihydrazide en tant qu'agent apte à piéger le formaldéhyde.

Des matériaux composites très divers sont utilisés dans le domaine de la construction et de l'aménagement de bâtiments d'habitation et de bureau, ainsi que de véhicules de transport. Certains de ces matériaux tels que les isolants acoustiques et/ou thermiques, les panneaux de bois, les éléments de mobilier et de décoration, utilisent des adhésifs, des peintures et des vernis contenant des résines à base de formaldéhyde. La proportion de formaldéhyde libre dans ces matériaux est maintenue à un niveau très bas notamment grâce à l'incorporation d'une faible quantité d'agents aptes à piéger le formaldéhyde.

Cependant, la réglementation en matière de protection contre les émissions indésirables de produits, tels que le formaldéhyde, qui peuvent présenter un risque pour la santé des individus devient plus stricte et impose de réduire encore la quantité de formaldéhyde libre présent dans les matériaux ou susceptible d'être émis par ceux-ci au cours du temps.

Des moyens pour réduire la teneur en formaldéhyde à l'intérieur de bâtiments sont connus.

Il a été proposé d'inclure des particules d'oxyde de titane photocatalytique dans une peinture ou un matériau en plâtre (US-A-2005/0226761), un papier ou un matériau textile, plastique ou en bois (EP-A-1 437 397).

Il est aussi connu d'utiliser un hydrazide dans un matériau de construction à base de plâtre ou de ciment (US-A-2004/0101695 et JP-A-2004115340) ou un carbodihydrazide dans un panneau de fibres de bois (EP 1 905 560).

La présente invention a pour but de réduire la quantité de formaldéhyde présent à l'intérieur des bâtiments, notamment d'habitation, et de véhicules de transport.

Pour atteindre ce but, la présente invention propose un mat de fibres constituées d'une polymère organique, qui contient au moins un dihydrazide tel que défini dans la revendication 1 et un agent tensio-actif anionique. Un autre objet de l'invention concerne l'utilisation du mat précité, en particulier en tant que revêtement de surface de produits d'isolation thermique et/ou acoustique à base de laine minérale.

Le dihydrazide conforme à la présente invention répond à la formule suivante

H₂N - NH - CO - R - CO - NH - NH₂

dans laquelle R représente
- un radical alkylène, linéaire ou ramifié, de préférence renfermant 1 à 18 atomes de carbone, éventuellement substitué par un ou plusieurs radicaux hydroxyles, ou
- un radical arylène, de préférence phénylène ou biphénylène, éventuellement substitué par un ou plusieurs radicaux hydroxyles, un ou plusieurs atomes d'halogène, notamment F, Cl ou Br, ou un ou plusieurs radicaux alkyles, linéaires ou ramifiés, renfermant 1 à 4 atomes de carbone.

De manière avantageuse, le dihydrazide est choisi parmi les dihydrazides dont le radical R est un radical alkylène en C₁-C₁₂, de préférence en C₁-C₈. Le dihydrazide préféré est le dihydrazide d'acide adipique.

De préférence, la quantité de dihydrazide représente 0,1 à 50 % du poids du mat de fibres de polymère, avantageusement 0,2 à 20 %, et mieux encore 0,3 à 10 %.

Avantageusement, le dihydrazide est utilisé conjointement avec un agent tensio-actif qui a pour effet d'accroître l'affinité des fibres pour le dihydrazide. Il en résulte une répartition plus homogène du dihydrazide dans le mat.

L'agent tensio-actif conforme à l'invention est un tensio-actif anionique. Préféré est le disulfonate d'alkydiphényloxyde.

La quantité d'agent tensio-actif représente généralement moins de 90 % du poids du dihydrazide, de préférence de 20 à 80 %, et avantageusement de 55 à 65 %.

Le mat conforme à l'invention est à base de fibres constituées d'un polymère organique.

A titre d'exemples, on peut citer les fibres de polyoléfine, par exemple de polyéthylène, de polypropylène, de polyisobutylène et de polyméthylpentène, de polyacétate de vinyle (homopolymère ou copolymère), par exemple d'éthylène et d'acétate de vinyle (EVA), de polyalcool vinylique (homopolymère ou copolymère), par exemple d'éthylène et d'alcool vinylique, de polyacide lactique, d'acrylonitrile, par exemple modacrylique (renfermant 35 à 85 % de motifs acrylonitrile), de poly(oxyalkylène), par exemple de poly(oxyéthylène), de poly(oxyphénylène),de polyacrylique ou de polyacrylate, par exemple de polyméthacrylate de méthyle (PMMA), de polyester, notamment de polytéréphtalate d'alkylène, par exemple de polyéthylène téréphtalate et le polybutylène téréphtalate, de polyamide, de polyimide, de polymère chloré et/ou fluoré, par exemple de polychlorure de vinyle, de polychlorofluoroéthylène, de perfluoroéthylène et de perfluoropropylène, de polysulfone, par exemple polyéthersulfone, de polyuréthane, notamment d'élastane (au moins 85 % de polyuréthane élastomère thermoplastique), de polybenzimidazole et d'aramide.

Les fibres préférées sont des fibres de polymère thermoplastique car elles peuvent être obtenues facilement par des procédés traditionnels opérant par filage ou co-filage de matière plastique fondue, en particulier de polyester, avantageusement de polyéthylène téréphtalate.

Le mat peut être constitué de fibres constituées d'un seul polymère ou d'un mélange de fibres de polymères différents.

Le mat de fibres de polymère peut être composé des filaments continus, ou de filaments discontinus de longueur pouvant atteindre 1000 mm, de préférence variant de 5 et 500 mm et avantageusement de 50 à 100 mm.

La masse linéique des fibres peut varier dans une large mesure, par exemple jusqu'à 30 dtex, de préférence est au moins égale à 0,9 dtex, avantageusement varie de 2 à 20 dtex et mieux encore de 3 à 10 dtex.

Bien que l'invention concerne plus particulièrement un mat de fibres de polymère synthétique, elle s'applique également aux fibres de polymère d'origine naturelle contenant notamment des polysaccharides et/ou des protéines, telles que les fibres animales (laine ou soie) et végétales (coton, lin, chanvre, sisal, coco, bambou, ...).

Le mat conforme à l'invention peut être constitué des fibres synthétiques ou naturelles précitées ou d'un mélange de ces fibres.

Le mat de fibres de polymère peut également comprendre des éléments de renforcement sous la forme de fibres de diamètre supérieur au diamètre des fibres de polymère qui constituent le mat, ou de fils composés d'une pluralité de filaments, ayant ou non subi une torsion. Les éléments de renforcement peuvent être constitués d'une matière polymère identique ou différence de celle des fibres constituant le mat, ou d'une autre matière, par exemple du verre.

La proportion des éléments de renforcement dans le mat de fibres de polymère demeure faible et représente généralement au plus 10 % du poids des fibres de polymère.

Le mat de fibres de polymère conforme à la présente invention présente une masse surfacique qui varie de 5 à 1000 g/m², de préférence 10 à 800 g/m², avantageusement de 15 à 300 g/m² et mieux encore est au plus égale à 100 g/m².

Il va de soi que des masses surfaciques plus importantes peuvent être obtenues en superposant plusieurs mats de fibres de polymère conformes à la présente invention.

Le mat utilisable dans le cadre de la présente invention peut être fabriqué selon les procédés connus permettant d'obtenir des fibres de polymère, notamment par les procédés par voie sèche qui opèrent par cardage ou par défibrage aérodynamique (« air laid »), par les procédés par voie fondue qui opèrent par filage direct (« spunlaid) ou par extrusion (« spundbonding » ou « melt blow »), par les procédés par voie humide qui opèrent à partir d'une suspension de fibres dans l'eau, similaire à celui mis en oeuvre pour l'obtention du papier ou par des techniques spécifiques, par exemple « electrospinning » et « flash spinning ».

De manière classique, le mat de fibres de polymère peut en outre contenir un liant qui lie lesdites fibres et lui confère des propriétés mécaniques adaptées à l'usage désiré, notamment une rigidité suffisante pour pouvoir être manipulé facilement.

Le liant comprend généralement au moins un polymère apte à lier les fibres, ledit polymère pouvant être de même nature ou de nature différente de celui qui constitue les fibres.

Ce polymère peut être un polymère thermoplastique, par exemple le styrène-acrylonitrile, l'acrylonitrile-butadiène-styrène, le (tri)acétate de cellulose, le polystèrene expansé, une polyoléfine telle que le polyéthylène et le polypropylène, un poly(méth)acrylate, un polyacétate de vinyle ou un polyoxyméthylène ; un polymère thermodurcissable, par exemple un polyester insaturé, un epoxyde, une résine phénolique telle qu'une novolaque ou un résol, notamment ayant un taux d'aldéhyde(s) libre(s) inférieur à 0,05 %, un polyimide, un polyuréthane, un phénoplaste ou un biopolymère par exemple un polysaccharide ou une protéine ; un polymère élastomère, par exemple un polymère fluoré, notamment à base de fluorure de vinylidène, le néoprène, un polyacrylique, un polybutadiène, un polyéther amide, un silicone, un caoutchouc naturel ou styrène-butadiène (SBR), ou un biopolymère, par exemple un polysaccharide ou une protéine.

Le liant représente généralement 5 à 300 % en poids du mat de fibres de polymère, de préférence moins de 100 %.

Dans ce cas, il est nécessaire de traiter le mat de fibres de polymère à une température suffisante pour que le liant puisse réticuler. La température de traitement dépend du polymère constituant les fibres du mat et du polymère entrant dans la composition du liant : elle doit demeurer largement inférieure à la température de dégradation du polymère des fibres afin d'éviter la destruction du mat.

L'application du dihydrazide sur le mat de fibres de polymère peut être effectuée par tout moyen connu, par exemple par imprégnation, enduction ou pulvérisation d'une solution, d'une dispersion ou d'une émulsion dudit dihydrazide.

La phase liquide utilisable pour solubiliser, disperser ou mettre en émulsion le dihydrazide est généralement l'eau.

La phase liquide peut comprendre en outre une faible proportion d'un co-solvant miscible avec l'eau qui accroît la mouillabilité des fibres de polymère.

Le co-solvant est choisi parmi les solvants organiques polaires tels que les alcools, notamment l'éthanol ou le propanol, et les cétones, notamment l'acétone.

En règle générale, la quantité de co-solvant n'excède pas 30 % du poids total de l'eau et du co-solvant, et de préférence demeure inférieure à 20 %.

Le mat de fibres de polymère conforme à la présente invention peut être utilisé dans de nombreuses applications, par exemple :
- dans le bâtiment, en tant que revêtement de murs, de sols et/ou de plafonds, revêtement de surface ou de jointement de panneaux de plâtre ou de ciment, revêtement de surface de produits d'isolation thermique et/ou phonique, en particulier à base de laine minérale, de polystyrène ou d'une mousse organique ou inorganique destinés notamment aux applications sous-toiture,
- dans l'automobile, en tant que matériau de garnissage ou tissu décoratif (tablette, coffre, porte, siège, tapis de sol) ou matériau amortisseur phonique (capot, plancher, ciel de pavillon),
- dans le domaine géologique, en tant que géotextiles, notamment revêtement pour asphalte ou matériau de stabilisation des sols,
- dans l'industrie, en tant que tissu enduit, filtre pour gaz (ventilation, climatisation) ou liquides tels que des huiles, revêtement pour la protection des semences et des cultures ou revêtement pour l'ameublement (support de papier peint ou sous-couche de tapis.

L'exemple qui suit permet d'illustrer l'invention sans toutefois la limiter.

### EXEMPLE 1

### a) obtention du mat

Dans un récipient, on verse 141,1 g d'eau, 5,9 g de dihydrazide d'acide adipique et 3 g de disulfonate d'alkyldiphényloxyde (Dowfax® commercialisé par la société Dow Chemical).

On plonge un mat de fibres de polyéthylène téréphtalate (18 g/m²) dans la solution obtenue, puis on le retire et on le sèche dans une étuve à 110°C pendant 1 minute.

La quantité de dihydrazide d'acide adipique déposée sur le mat est égale à 4 g/m².

### b) capacité à piéger le formaldéhyde dans des conditions statiques

Le mat (25 cm x 5 cm) est placé dans un récipient contenant une solution aqueuse de formol à 0,4 g/l. Le mat est disposé au dessus de la solution de sorte qu'il n'est pas en contact avec celle-ci. Le récipient est fermé hermétiquement puis il est placé dans une étuve à 50°C pendant 16 heures.

Le mat est retiré et lavé à l'eau pour afin d'éliminer le formaldéhyde n'ayant pas réagi avec le dihydrazide d'acide adipique.

Le mat est ensuite découpé en plusieurs morceaux qui sont placés dans un récipient contenant 100 ml d'eau distillée, sous agitation. Le récipient est chauffé à 60°C pendant 24 heures. On récupère la phase aqueuse, on la filtre et on mesure la quantité de formaldéhyde qu'elle contient par spectrocolorimétrie.

La capacité à piéger le formaldéhyde du mat de l'exemple 1 est égale à 930,44 mg/m².

Par comparaison, un mat identique ne contenant pas de dihydrazide d'acide adipique, traité dans les mêmes conditions, n'est pas apte à piéger le formaldéhyde.

### c) capacité à piéger le formaldéhyde en conditions dynamiques

Un échantillon du mat obtenu sous a) est placé dans un dispositif conforme à la norme ISO 16000-9, modifié en ce que le débit de ventilation spécifique est égal à 0,5 m³/(m².h) et le taux de charge est égal à 1 m²/ m³.
1 - dans un premier temps, la chambre de test du dispositif est alimentée avec un flux d'air continu contenant de 95 µg/m³ de formaldéhyde pendant 8 jours. On mesure la quantité de formaldéhyde dans l'air entrant et sortant sur une durée de 8 jours, et on calcule la réduction de la quantité de formaldéhyde par unité de volume d'air.
Le formaldéhyde est mesuré par chromatographie en phase liquide (HPLC) dans les conditions de la norme ISO 16000-3.
Dans le tableau 1, on indique la réduction de la quantité de formaldéhyde opérée avec le mat contenant le dihydrazide d'acide adipique par comparaison avec un mat ne contenant aucun agent apte à piéger le formaldéhyde (Référence).

**Tableau 1**

| Réduction du formaldéhyde (µg/m³) | Exemple | Référence |
|---|---|---|
| 1 jour | 32 | 0 |
| 2 jours | 23 | 0 |
| 8 jours | 19 | 0 |

2 - dans un deuxième temps, on alimente la chambre pendant 7 jours avec de l'air ne contenant pas de formaldéhyde et on mesure la quantité de formaldéhyde présent dans l'air à la sortie de la chambre.

Le formaldéhyde est mesuré dans les mêmes conditions qu'au paragraphe 1.

La quantité de formaldéhyde émise par le mat selon l'exemple conforme à l'invention est équivalente à celle que l'on mesure lorsque la chambre ne contient aucun mat. On peut en conclure que le formaldéhyde est lié au dihydrazide d'acide adipique de manière forte et durable.

### EXEMPLE 2

On procède dans les conditions de l'exemple 1 modifiées en ce que le mat de polyester est plongé dans une solution obtenue en mélangeant 121,9 g d'eau, 5,1 g de dihydrazide d'acide adipique, 20 g d'une solution de liant renfermant un polymère thermodurcissable (Aquaset® TF 150 commercialisé par Rohm & Haas ; taux de matières solides : 54 %) et 3 g de disulfonate d'alkyldiphényloxyde (Dowfax® commercialisé par la société Dow Chemical), et que le séchage est effectué à 210°C.

La quantité de dihydrazide d'acide adipique déposée sur le mat est égale à 3 g/m².

La capacité à piéger le formaldéhyde du mat de l'exemple 2, dans des conditions statiques sous b), est égale à 694,44 mg/m².

Par comparaison, un mat identique ne contenant pas de dihydrazide d'acide adipique, traité dans les mêmes conditions, n'est pas apte à piéger le formaldéhyde.

## Revendications

1. Mat de fibres constituées d'un polymère organique, **caractérisé en ce qu'**il contient
- au moins un dihydrazidede formule
H₂N-NH-CO-R-CO-NH-NH₂
dans laquelle R représente
- un radical alkylène, linéaire ou ramifié, de préférence renfermant 1 à 18 atomes de carbone, éventuellement substitué par un ou plusieurs radicaux hydroxyles, ou
- un radical arylène, de préférence phénylène ou biphénylène, éventuellement substitué par un ou plusieurs radicaux hydroxyles, un ou plusieurs atomes d'halogène, notamment F, Cl ou Br, ou un ou plusieurs radicaux alkyles, linéaires ou ramifiés, renfermant 1 à 4 atomes de carbone, et
- un agent tensio-actif anionique.

2. Mat selon la revendication 1, **caractérisé en ce que** le dihydrazide est choisi parmi les dihydrazides dont le radical R est un radical alkylène en C₁-C₁₂, de préférence en C₁-C₈.

3. mat selon la revendication 2, **caractérisé en ce que** le dihydrazide est le dihydrazide d'acide adipique.

4. Mat selon l'une des revendications 1 à 3, **caractérisé en ce que** la quantité de dihydrazide représente 0,1 à 50 % du poids du mat, de préférence 0,2 à 20 %, avantageusement 0,2 à 20 % et mieux encore 0,3 à 10 %.

5. Mat selon l'une des revendications 1 à 4, **caractérisé en ce que** l'agent tensio-actif représente moins de 90 % du poids du dihydrazide, de préférence de 20 à 80 %, et avantageusement de 55 à 65 %.

6. Mat selon l'une des revendications 1 à 5, **caractérisé en ce que** le polymère est une polyoléfine, un polyacétate de vinyle, un polyalcool vinylique, un polyacide lactique, un acrylonitrile, un poly(oxyalkylène), un poly(oxyphénylène), un polyacrylique ou un polyacrylate , un polyester, un polyamide, un polyimide, un polymère chloré et/ou fluoré, une polysulfone, un polyuréthane, un polybenzimidazole ou un aramide.

7. Mat selon la revendication 6, **caractérisé en ce que** le polymère est un polyester.

8. Mat selon l'une des revendications 1 à 7, **caractérisé en ce qu'**il présente une masse surfacique qui varie de 5 à 1000 g/m², de préférence 10 à 800 g/m², avantageusement de 15 à 300 g/m² et mieux encore est au plus égale à 100 g/m².

9. Mat selon l'une des revendications 1 à 8, **caractérisé en ce qu'**il comprend en outre un liant qui renferme un polymère apte à lier les fibres, de même nature ou de nature différente de celui qui constitue les fibres.

10. Mat selon la revendication 9, **caractérisé en ce que** le polymère apte à lier les fibres est un polymère thermoplastique, thermodurcissable ou élastomère, ou un biopolymère.

11. Mat selon la revendication 9 ou 10, **caractérisé en ce que** le liant représente 5 à 300 % en poids du mat de fibres de polymère, de préférence moins de 100 %.

12. Utilisation du mat selon l'une des revendications 1 à 11 en tant que revêtement de murs, de sols et/ou de plafonds.

13. Utilisation du mat selon l'une des revendications 1 à 11 en tant que revêtement de surface ou de jointement de panneaux de plâtre ou de ciment.

14. Utilisation du mat selon l'une des revendications 1 à 11 en tant que revêtement de surface de produits d'isolation thermique et/ou phonique, en particulier à base de laine minérale, de polystyrène ou d'une mousse organique ou inorganique.

## Patentansprüche

1. Fasermatte bestehend aus einem organischen Polymer, **dadurch gekennzeichnet, dass sie** Folgendes enthält:
- wenigstens ein Dihydrazid der Formel
H₂N-N H-CO-R-CO-NH-NH₂
wobei R darstellt:
- einen linearen oder verzweigten Alkylenrest, vorzugsweise einschließend 1 bis 18 Kohlenstoffatome, möglicherweise substituiert durch einen oder mehrere Hydroxylreste oder
- einen Arylenrest, vorzugsweise Phenylen oder Biphenylen, möglicherweise substituiert durch einen oder mehrere Hydroxylreste, ein oder mehrere Halogenatome, insbesondere F, Cl oder Br oder einen oder mehrere lineare oder verzweigte Alkylreste, einschließend 1 bis 4 Kohlenstoffatome und
- ein anionisches Tensid.

2. Fasermatte nach Anspruch 1, **dadurch gekennzeichnet, dass** das Dihydrazid ausgewählt wird unter den Dihydraziden, deren Rest R ein Alkylenrest von C₁-C₁₂, vorzugsweise von C₁-C₈ ist.

3. Matte nach Anspruch 2, **dadurch gekennzeichnet, dass** das Dihydrazid das Dihydrazid der Adipinsäure ist.

4. Matte nach einem der Ansprüche 1 bis3, **dadurch gekennzeichnet, dass** die Menge Dihydrazid0,1 bis 50 % des Gewichts der Matte darstellt, vorzugsweise 0,2 bis 20 %, vorteilhafterweise 0,2 bis 20 % und noch bevorzugter 0,3 bis 10 %.

5. Matte nach einem der Ansprüche 1 bis 4, **dadurch gekennzeichnet, dass das** Tensid weniger als 90% des Gewichts des Dihydrazids darstellt, vorzugsweise zwischen 20 und 80 % und vorteilhafterweise zwischen 55 und 65 %.

6. Matte nach einem der Ansprüche 1 bis 5, **dadurch gekennzeichnet, dass** das Polymer ein Polyolefin, ein Vinylpolyacetat, ein Vinylpolyalkohol, eine Polymilchsäure, ein Acrylonitril, ein Poly(oxyalkylen), ein Poly(oxy-phenylen), ein Polyakryl oder ein Polyakrylat, ein Polyester, ein Polyamid, ein Polyimid, ein gechlorter und/oder gefluorter Polymer, ein Polysulfon, ein Polyurethan, ein Polybenzimidazol oder ein Aramid.

7. Matte nach Anspruch 6, **dadurch gekennzeichnet, dass** der Polymer ein Poyester ist.

8. Matte nach einem der Ansprüche 1 bis 7, **dadurch gekennzeichnet, dass sie** eine flächenbezogene Masse aufweist, die zwischen 5 und 1000 g/m² variiert, vorzugsweise 10 und 800 g/m², vorteilhafterweise 15 und 300 g/m² und noch bevorzugter höchstens gleich à 100 g/m².

9. Matte nach einem der Ansprüche 1 bis 8, **dadurch gekennzeichnet, dass** sie unter Anderem ein Bindemittel umfasst, das ein Polymer umschließt, das die Fasern verbinden kann, von der selben oder einer anderen Art wie der, aus dem die Fasern bestehen.

10. Matte nach dem Anspruch 9, **dadurch gekennzeichnet, dass** das Polymer, das in der Lage ist, die Fasern zu verbinden, ein thermoplastisches Polymer, wärmehärtend oder Elastomer oder ein Biopolymer ist.

11. Matte nach dem Anspruch 9 oder 10, **dadurch gekennzeichnet, dass** das Bindemittel 5 bis 300% des Gewichts der Matte aus Polymerfasern darstellt, vorzugsweise weniger als 100 %.

12. Verwendung der Matte nach einem der Ansprüche 1 bis 11 als Verkleidung von Wänden, Böden und/oder Decken.

13. Verwendung der Matte nach einem der Ansprüche 1 bis 11 als Verkleidung der Oberfläche oder Verfugung von Gips- oder Zementplatten.

14. Verwendung der Matte nach einem der Ansprüche 1 bis 11 als Verkleidung der Oberfläche von Wärme- und/oder Akustikisolationsprodukten, insbesondere basierend auf Mineralwolle, Styropor oder einem organischen oder anorganischen Schaum.

## Claims

1. A mat of fibers constituted of an organic polymer, **characterized in that** it contains
- at least one dihydrazide of formula
H₂N-NH-CO-R-CO-NH-NH₂
in which R represents
- a linear or branched alkylene radical preferably containing 1 to 18 carbon atoms, optionally substituted by one or more hydroxyl radicals; or
- an arylene, preferably phenylene or biphenylene, radical optionally substituted by one or more hydroxyl radicals, one or more halogen atoms, especially F, Cl or Br, or one or more linear or branched alkyl radicals containing 1 to 4 carbon atoms; and
- an anionic surfactant.

2. The mat as claimed in claim 1, **characterized in that** the dihydrazide is chosen from the dihydrazides for which the radical R is a C₁-C₁₂, preferably C₁-C₈ alkylene radical.

3. The mat as claimed in claim 2, **characterized in that** the dihydrazide is adipic acid dihydrazide.

4. The mat as claimed in one of claims 1 to 3, **characterized in that** the amount of dihydrazide represents 0.1 to 50%, preferably 0.2 to 20%, advantageously 0.2 to 20% and better still 0.3 to 10% of the weight of the mat.

5. The mat as claimed in one of claims 1 to 4, **characterized in that** the surfactant represents less than 90%, preferably from 20 to 80%, and advantageously from 55 to 65% of the weight of the dihydrazide.

6. The mat as claimed in one of claims 1 to 5, **characterized in that** the polymer is a polyolefin, a polyvinyl acetate, a polyvinyl alcohol, a polylactic acid, an acrylonitrile, a polyoxyalkylene, a polyoxyphenylene, a polyacrylic or a polyacrylate, a polyester, a polyamide, a polyimide, a chlorinated and/or fluorinated polymer, a polysulfone, a polyurethane, a polybenzimidazole or an aramid.

7. The mat as claimed in claim 6, **characterized in that** the polymer is a polyester.

8. The mat as claimed in one of claims 1 to 7, **characterized in that** it has a surface density that varies from 5 to 1000 g/m², preferably 10 to 800 g/m², advantageously from 15 to 300 g/m² and better still is at most equal to 100 g/m².

9. The mat as claimed in one of claims 1 to 8, **characterized in that** it also comprises a binder which contains a polymer capable of binding the fibers, of the same nature or of a different nature to that which constitutes the fibers.

10. The mat as claimed in claim 9, **characterized in that** the polymer capable of binding the fibers is a thermoplastic, thermosetting or elastomeric polymer, or a biopolymer.

11. The mat as claimed in claim 9 or 10, **characterized in that** the binder represents 5 to 300%, preferably less than 100%, by weight of the mat of polymer fibers.

12. The use of the mat as claimed in one of claims 1 to 14 as covering for walls, floors and/or ceilings.

13. The use of the mat as claimed in one of claims 1 to 11 as surface or sealing covering for gypsum board or cement board.

14. The use of the mat as claimed in one of claims 1 to 11 as surface covering for thermal and/or sound insulation products, in particular based on mineral wool, polystyrene or an organic or inorganic foam.
